# EUROPÄISCHE PATENTSCHRIFT

(11) **EP 2 687 354 B1**
(45) Veröffentlichungstag und Bekanntmachung des Hinweises auf die Patenterteilung: **05.04.2017**
(21) Anmeldenummer: 12176773.5
(22) Anmeldetag: 17.07.2012
(51) Int. Cl.: B29C 65/02, B32B 5/32, B32B 7/04, B32B 37/04, B29C 65/20, B29C 65/14, B29K 105/04, B29K 25/00, B32B 27/30

(54) **Thermoplastische Schaumstoffplatten mit einer Schweißnahtdicke von 30 bis 200 Mikrometer**
Thermoplastic foam plates with a welding seam thickness of 30 to 200 micrometers
Plaques de mousse thermoplastiques avec un cordon de soudure d'une épaisseur de 30 à 200 micromètres

(43) Veröffentlichungstag der Anmeldung: 22.01.2014
(60) Teilanmeldung: 16192861.9
(73) Patentinhaber: BASF SE, 67056 Ludwigshafen am Rhein (DE)
(72) Erfinder: Scherzer, Dietrich, Dr., 67433 Neustadt (DE); Hahn, Klaus, Dr., 67281 Kirchheim (DE); Hahn, Christoph, Dr., 67435 Neustadt (DE); Licht, Ulrike, Dr., 68309 Mannheim (DE); Mochev, Stefan, 68159 Mannheim (DE); Dietzen, Franz-Josef, Dr., 67454 Haßloch (DE); Diehlmann, Tim, 67269 Grünstadt (DE)

(56) Entgegenhaltungen:
- EP-A1- 2 153 982
- EP-A1- 2 397 303
- DE-A1-102004 056 546
- US-A1- 2004 188 015
- POTENTE H ET AL: "Schweissen von Thermoplasten mit zellularer Struktur", SCHWEISSEN UND SCHNEIDEN, DVS VERLAG, DUSSELDORF, DE, Bd. 58, Nr. 12, 1. Dezember 2006 (2006-12-01), Seiten 662-666, XP001518261, ISSN: 0036-7184

## Beschreibung

Die vorliegende Efindung betrifft zumindest zweilagige thermoplastische Schaumstoffplatten als solche sowie Verfahren zu deren Herstellung durch thermisches Verschweißen von mindestens zwei dünneren thermoplastischen Schaumstoffplatten. Die zumindest zweilagigen thermoplastischen Schaumstoffplatten haben mindestens eine Schweißnaht mit einer durchschnittlichen Dicke von 30 bis 200 µm, vorzugsweise hat jede Schweißnaht eine solche Dicke. Die Anzahl der Lagen der thermoplastischen Schaumstoffplatte als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatten als solche erhalten, im Fall von vier dünneren thermoplastische Schaumstoffplatten ergibt sich demzufolge eine vierlagige thermoplastische Schaumstoffplatte als solche.

DE 102004056546 und EP 2153982 betreffen Verfahren zur Herstellung von Schaumplatten mit hoher Festigkeit.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser. Extrudierte Kunststoffschaumplatten von großer Dicke werden in DE-A 101 063 341 offenbart. Mit dem darin beschriebenen Verfahren zur Verbindung von mindestens zwei Ausgangplatten aus Kunststoffschaum zu einer neuen Platte können Platten mit einer Mindestdicke von 70mm hergestellt werden. Vorzugsweise handelt es sich dabei um Flour-chlor-kohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweise Verschweißung oder stellenweise Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 341 sind jedoch keine Angaben enthalten, wie anstelle einer Verklebung die Verschweißung der Ausgangsplatten konkret durchgeführt werden kann, ebenso wenig ist darin offenbart, ob und in welchem Umfang eine Schweißnaht beim thermischen Verschweißen ausgebildet wird.

DE-A 44 21 016 offenbart ein Verfahren zur Herstellung von CO₂ geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen kann mit Hilfe eines Heizschwertes durchgeführt werden, wodurch die Oberflächen der eingesetzten Kunststoffschaumplatten angeschmolzen werden. Das Heizschwert kann elektrisch oder mit einem durchfließenden Heizmedium auf die notwendige Schweißtemperatur gebracht werden, die je nach Kunststoffschaum zwischen 100 und 150 °C beträgt. Auch in DE-A 44 21 016 sind keine Angaben enthalten, ob und in welchem Umfang eine Schweißnaht beim thermischen Verschweißen ausgebildet wird.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist. In WO 2012/016991 sind jedoch keine konkreten Angaben enthalten, welche Dicke die Schweißnaht an den entsprechenden Stellen hat bzw. ob die Dicke der Schweißnaht in irgendeinem Zusammenhang mit dem Brandverhalten der darin beschriebenen XPS-Kompositmaterialien steht.

Ein grundlegendes Problem beim thermischen Verschweißen ist die Brennbarkeit und das Erfüllen von Brandtests. Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zweioder mehrlagigen Platten mit einer (gegenüber den eingesetzten dünneren Ausgangsplatten) größerer Dicke. Dieses unterschiedliche Brandverhalten ist in der Ausbildung der so genannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, so dass das entsprechende Produkt nicht stabil ist.

Die der vorliegenden Erfindung zugrunde liegende Aufgabe besteht in der Bereitstellung von neuen zwei- oder mehrlagigen thermoplastischen Schaumstoffplatten als solchen bzw. einem entsprechenden Verfahren zur Herstellung von solchen zumindest zweilagigen thermoplastischen Schaumstoffplatten durch thermisches Verschweißen.

Gelöst wird für die Aufgabe durch eine Thermoplastische Schaumstoffplatte gemäß Anspruch 1.

Weiterhin wird die Aufgabe gelöst mit einem Herstellungsverfahren einer thermoplastischen Schaumstoffplatte gemäß Anspruch 7.

Die mit dem erfindungsgemäßen Verfahren hergestellten zumindest zweilagigen thermoplastischen Schaumstoffplatten zeichnen sich dadurch aus, dass die entsprechende Anzahl an dünneren thermoplastischen Schaumstoffplatten auf sehr stabile Weise zu den zumindest zweilagigen thermoplastischen Schaumstoffplatten (Produkt) zusammengefügt werden können und dass das erhaltene Produkt gleichzeitig einen verbesserten Flammschutz aufweist.

Vorzugsweise bestehen die erfindungsgemäßen zumindest zweilagigen thermoplastischen Schaumstoffplatten (als solche) den Brandtest B2 (gemäß DIN 4102).

Dies bedeutet, dass im Rahmen der vorliegenden Erfindung der Dochteffekt, insbesondere beim Brandtest B2, vermieden werden kann, so dass in den erfindungsgemäßen zumindest zweilagigen thermoplastischen Schaumstoffplatten die Schweißnaht der Brandprüfung gemäß Brandtest B2 standhält. Dies wird im Rahmen der vorliegenden Erfindung dadurch erzielt, indem die beim thermischen Verschweißen von zwei Ausgangsplatten zwischen diesen Ausgangsplatten gebildete Schweißnaht eine Dicke von durchschnittlich 30 bis 200 µm aufweist. Wird beispielsweise eine 3-oder mehrlagige thermoplastische Schaumstoffplatte hergestellt, weisen vorzugsweise alle zwischen den einzelnen Plattenpaaren gebildeten Schweißnähte eine Dicke von durchschnittlich 30 bis 200 µm auf, wobei die entsprechenden Dicken zwischen den einzelnen Plattenpaaren auch variieren können. Dieser Effekt kann durch ein gezieltes Unterbrechen der Verschweißungsnaht (beispielsweise durch Punkte, Linien oder Gitter) weiter verstärkt werden, weil dadurch auch die Brandzone zusätzlich gezielt unterbrochen werden kann. Die zumindest zweilagigen thermoplastischen Schaumstoffplatten als solche weisen weiterhin eine hohe Zugfestigkeit auf, vorzugsweise eine Zugfestigkeit von > 0,15 N/mm².

Ein besonders stabiler Zusammenhalt der einzelnen dünneren thermoplastischen Schaumstoffplatten wird dann erzielt, wenn diese auf Temperaturen oberhalb der Glasübergangtemperatur des verwendeten Thermoplasten erhitzt werden. Vorzugsweise werden die einzelnen dünneren thermoplastischen Schaumstoffplatten anschließend zusätzlich miteinander verpresst. Die mit dem erfindungsgemäßen Verfahren hergestellten zumindest zweilagigen thermoplastischen Schaumstoffplatten, insbesondere diejenigen, bei denen die Oberfläche der Schaumstoffplatten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Schaumstoffplatten.

Sofern das erfindungsgemäßes Verfahren unter Verwendung eines Absorbers von elektromagnetischer Strahlung durchgeführt wird, wobei der Absorber auf die entsprechenden Oberflächen der dünneren thermoplastischen Schaumstoffplatten, die miteinander thermisch verschweißt werden, aufgetragen wird, ist ein weiterer Vorteil darin zu sehen, dass die Strahlungsdurchlässigkeit der zumindest zweilagigen thermoplastischen Schaumstoffplatten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Nachfolgend werden die erfindungsgemäßen zumindest zweilagigen thermoplastischen Schaumstoffplatten als solche sowie das erfindungsgemäße Herstellungsverfahren dieser Schaumstoffplatten durch thermisches Verschweißen näher definiert.

Die erfindungsgemäße thermoplastische Schaumstoffplatte ist zumindest zweilagig, sie kann also genau zwei Lagen aufweisen oder dreilagig, vierlagig, fünflagig oder noch höher lagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander thermisch verschweißt werden. Die dünnen thermoplastischen Schaumstoffplatten werden auch als Ausgangsplatten bezeichnet. Im Falle einer zweilagigen thermoplastischen Schaumstoffplatte als solche werden also zwei dünnere thermoplastische Schaumstoffplatten miteinander thermisch verschweißt. Bei einer drei- oder vierlagigen thermoplastischen Schaumstoffplatten als solcher werden somit drei bzw. vier dünnere thermoplastische Schaumstoffplatten miteinander thermisch verschweißt. Sofern noch höher lagige thermoplastische Schaumstoffplatten als solche hergestellt werden soll, beispielsweise eine zehnlagige thermoplastische Schaumstoffplatte, müssen demzufolge die der Anzahl der Lagen entsprechende Anzahl an dünneren thermoplastischen Schaumstoffplatten, beispielsweise zehn dünnere thermoplastischen Schaumstoffplatten, miteinander thermisch verschweißt werden. Vorzugsweise ist die erfindungsgemäße thermoplastische Schaumstoffplatte zweilagig, dreilagig oder vierlagig, insbesondere ist die erfindungsgemäße thermoplastische Schaumstoffplatte zweilagig. Das thermische Verschweißen als solches (Durchführung) wird weiter unten im Text im Zusammenhang mit dem erfindungsgemäßen Herstellungsverfahren näher definiert.

Die zum thermischen Verschweißen verwendeten dünneren thermoplastischen Schaumstoffplatten entsprechen hinsichtlich ihrer chemischer Zusammensetzung den im Rahmen der vorliegenden Erfindung hergestellten zumindest zweilagigen thermoplastischen Schaumstoffplatten als solchen (ohne Berücksichtigung der im Rahmen des Verschweißungsvorganges optional auf die Oberflächen aufgebrachten Komponenten wie Absorber von elektromagnetischer Strahlung oder Flammschutzmittel bzw. ohne Berücksichtigung der infolge der Ausbildung der Schweißnaht an den entsprechenden Oberflächen auftretenden chemischen Veränderungen/Reaktionen). Die jeweils thermisch miteinander zu verschweißenden dünneren thermoplastischen Schaumstoffplatten weisen vorzugsweise dieselbe Dimensionen und/oder dieselbe chemische Zusammensetzung auf. Gegebenenfalls können aber auch dünnere thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander thermisch verschweißt, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

Die Dimensionierung der thermisch miteinander zu verschweißenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 10 bis 150 mm auf. Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten (Ausgangsplatten). Aufgrund des thermischen Verschweißens werden die jeweils miteinander zu verschweißenden Oberflächen der Ausgangsplatten zumindest etwas auf- oder angeschmolzen (Aufschmelzschritt), was in Abhängigkeit der zugeführten Wärmemenge zu einer gewissen Reduzierung der Dicke der jeweiligen Ausgangsplatte führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungsund/oder Aufschmelzschritt mit großer Wärmezufuhr durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Die zum thermischen Verschweißen eingesetzten dünneren thermoplastischen Schaumstoffplatten als solche sind dem Fachmann prinzipiell bekannt. Geeignete thermoplastische Schaumstoffplatten sind beispielsweise in EP-A 1 566 490 oder in Form von Blends in WO 2009/047487 offenbart. Beispielsweise können Platten aus amorphen, kristallinen oder teilkristallinen thermoplastischen Schaumstoffen eingesetzt werden.

Erfindungsgemäß sind die dünneren thermoplastischen Schaumstoffplatten ein Extrusionsschaumstoff von Polystyrol oder von einem aus Styrol hergestellten Copolymer. Weiterhin ist es bevorzugt, dass die dünneren thermoplastischen Schaumstoffplatten eine Dichte < 200 g/l aufweisen, bevorzugt eine Dichte von < 100 g/l. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Durch das thermische Verschweißen bildet sich zwischen den zu verschweißenden Oberflächen (der Ausgangsplatten) eine Schweißnaht aus. Anstelle des Begriffs "Schweißnaht" können auch die Begriffe "Schweißhaut" oder "Schweißzone" verwendet werden. Pro zu verschweißendem Ausgangsplattenpaar wird beim thermischen Verschweißen zwischen den miteinander in Kontakt gebrachten Oberflächen der beiden Ausgangsplatten eine Schweißnaht ausgebildet. Wird beispielsweise eine dreilagige thermoplastische Schaumstoffplatte hergestellt, werden drei dünnere thermoplastische Schaumstoffplatten (Ausgangsplatten) eingesetzt und somit zwei Schweißnähte ausgebildet. Erfindungsgemäß weist mindestens eine Schweißnaht eine durchschnittliche Dicke von 30 bis 200 µm auf. Vorzugsweise weist jede Schweißnaht eine durchschnittliche Dicke von 30 bis 200 µm auf, insbesondere hat jede Schweißnaht die gleiche Dicke (beispielsweise 100 µm). Im vorstehenden Beispiel weisen bei dieser bevorzugten Ausgestaltung also beide Schweißnähte eine durchschnittliche Dicke im Bereich von 30 bis 200 µm auf, wobei die Dicke (Stärke) der ersten Schweißnaht im Vergleich zur zweiten Schweißnaht gleich oder verschieden sein kann, vorzugsweise sind beide Werte gleich.

Vorzugsweise weist die Schweißnaht eine durchschnittliche Dicke von 50 bis 150 µm, mehr bevorzugt von 70 bis 130 µm, insbesondere von 80 bis 100 µm, auf. Die im Rahmen der vorliegenden Erfindung für die Dicke einer Schweißnaht aufgeführten Zahlenwerte sind als Durchschnittswert zu verstehen, wobei vorzugsweise zur Ermittlung eines solchen Durchschnittswerts fünf Messpunkte, die über die gesamte Länge der Schweißnaht verteilt sind und die durch Lichtmikroskopie bestimmt werden, herangezogen werden.

Erfindungsgemäß haben die erfindungsgemäßen thermoplastischen Schaumstoffplatten beziehungsweise die entsprechenden Ausgangsplatten eine Zellgröße < 150 µm, vorzugsweise <80 µm und/oder die mittlere Zellenzahl beträgt > 6 Zellen/mm. Die jeweiligen Werte der Ausgangsplatten finden sich auch in den erfindungsgemäßen thermoplastischen Schaumstoffplatten wieder, das heißt sie werden durch das thermische Verschweißen nicht verändert.

Die erfindungsgemäßen thermoplastischen Schaumstoffplatten können zusätzliche Stoffe/Verbindungen mit speziellen Verwendungseigenschaften, beispielsweise Flammschutzmittel oder Absorber von elektromagnetischer Strahlung, enthalten. Erfindungsgemäß werden solche zusätzlichen Stoffe vor dem thermischen Verschweißen auf mindestens eine Oberfläche der thermisch zu verschweißenden Ausgangsplatten aufgetragen, vorzugsweise werden diese Stoffe pro zu verschweißendem Plattenpaar auf beide Oberflächen der Ausgangsplatten aufgetragen.

In einer Ausführungsform der vorliegenden Erfindung enthalten die erfindungsgemäßen thermoplastischen Schaumstoffplatten mindestens ein Flammschutzmittel. Flammschutzmittel als solche sind dem Fachmann bekannt. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung. Die vorgenannten Flammschutzmittel, vorzugsweise die phosphorhaltigen Flammschutzmittel, aber nicht die halogenierten organischen Verbindungen, werden vorzugsweise vor dem thermischen Verschweißen direkt auf mindestens eine Oberfläche (pro Plattenpaar) der zu verschweißenden Ausgangsplatten aufgetragen.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlor-isopropyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbindungen, besonders bevorzugt sind HBCD (Hexabromcyclododekan) oder bromierte Polystyrole. Bromierte Polystyrole sind kommerziell erhältlich, beispielsweise von Emerald, Fa. Great Lakes. Sie werden vorzugsweise in Mengen von 0,5 bis 5 Gew.-% (bezogen auf die Ausgangsplatte) eingesetzt. Sofern halogenierte organische Verbindungen als Flammschutzmittel eingesetzt werden, erfolgt dies vorzugsweise bereits während des Herstellungsprozesses der Ausgangsplatten, das heißt, das Flammschutzmittel ist gleichmäß9g über die gesamte Dicke der jeweiligen Ausgangsplatte verteilt.

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess. In einer Ausführungsform der vorliegenden Erfindung ist Blähgraphit bevorzugt, der ebenfalls als Absorber verwendet werden kann.

Weiterhin können die erfindungsgemäßen thermoplastischen Schaumstoffplatten mindestens einen Absorber von elektromagnetischer Strahlung (im nachfolgenden Text auch als "Absorber" bezeichnet) enthalten. Vorzugsweise wird der Absorber von elektromagnetischer Strahlung als Dispersion eingesetzt, insbesondere als wässrige Dispersion. Das Auftragen auf die Plattenoberfläche kann beispielsweise durch Pinseln, Rakeln, Walzen, Sprühen oder Drucken erfolgen.

Die Menge an Absorber (fest) auf einer Oberfläche beträgt normalerweise 0.01g/m² bis 100 g/m², bevorzugt 0,1g/m² bis 50 g/m². Besonders bevorzugt 1 g/m² bis 20 g/m². Die Absorber können einseitig oder beidseitig aufgetragen werden.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere lonomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellen-Strahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellen-Absorber.

Unter IR-Absorber ist im Rahmen dieser Anmeldung eine Verbindung zu verstehen, die aufgebracht in einer Schichtdicke von < 50 µm bei mindestens einer Wellenlänge von Strahlung des Wellenlängenbereichs von 700 nm bis 1000 µm eine Absorption ≥90 % zeigt. Bevorzugt ist der Wellenlängenbereich von >700 nm bis 20 µm, sowie die Wellenlängen 9,6 µm und 10,6 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellen Absorber, insbesondere Graphit oder Ruß. Weiterhin ist es bevorzugt, dass die elektromagnetische Strahlung IR-Strahlen und/oder Mikrowellen-Strahlen sind.

Wie vorstehend bereits erwähnt, können außer dem Flammschutzmittel und/oder dem Absorber von elektromagnetischer Strahlung auch weitere Stoffe mit anderen Verwendungseigenschaften auf die zu verschweißende Oberfläche der entsprechenden dünneren thermoplastischen Schaumstoffplatten aufgetragen werden. Geeignete weitere Stoffe können beispielsweise Bindemittel, pH-Regulatoren sowie gegebenenfalls Lösungsmittel sein. Bindemittel, pH-Regulatoren sowie Lösungsmittel als solche sind dem Fachmann bekannt.

In einer Ausführungsform der vorliegenden Erfindung wird auf mindestens einer Oberfläche von mindestens einer dünneren thermoplastischen Schaumstoffplatte ein Gemisch aufgetragen wird, das i) mindestens einen Absorber von elektromagnetischer Strahlung, ii) mindestens ein Bindemittel und/oder iii) mindestens ein Flammschutzmittel enthält.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilagigen thermoplastischen Schaumstoffplatten (Verbundplatten) aufgrund der Verwendung des besagten Bindemittels noch weniger von den Ausgangsplatten abweichen.

Ein weiterer Gegenstand der vorliegenden Erfindung ist ein Verfahren zur Herstellung der vorstehend beschriebenen thermoplastischen Schaumstoffplatten gemäß Anspruch 7.

Die Durchführung des thermischen Verschweißens als solchem ist dem Fachmann bekannt. Der Effekt des thermischen Verschweißens wird bei den zu verschweißenden Oberflächen erzielt, indem die jeweiligen Oberflächen der Ausgangsplatten einer Wärmequelle ausgesetzt werden. Die entsprechenden Wärmequellen oder Vorrichtungen sind dem Fachmann bekannt. Vorzugsweise wird das thermische Verschweißen mit einer Vorrichtung ausgewählt aus einem Heizschwert, einem Heizgitter oder einer Heizplatte durchgeführt wird, wobei die Vorrichtung gegebenenfalls mit Noppen oder Rillen versehen sein kann. Beispielsweise kann das thermische Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum thermischen Verschweißen Noppen oder Rillen aufweist, können auf diese Weise die strukturierten Vertiefungen auf die entsprechende Oberfläche der thermisch zu verschweißenden dünneren thermoplastischen Schaumstoffplatten aufgebracht werden. Anstelle der Verwendung einer Vorrichtung wie eines Heizschwerts oder eines Heizgitters ist es im Rahmen der vorliegenden Erfindung auch möglich, dass das thermische Verschweißen, also die Wärmezufuhr, unter Verwendung von elektromagnetischer Strahlung teilweise oder vollständig durchgeführt wird. Ebenso ist es denkbar, dass im Anschluss an das thermische Verschweißen mittels eines Heizschwerts oder eines Heizgitters ein zusätzlicher Verschweißschritt unter Verwendung von elektromagnetischer Strahlung nachgeschaltet ist. In Abhängigkeit von der konkret ausgewählten Verschweißungstechnik können unterschiedliche Verfahrensparameter variiert werden, um mindestens eine Schweißnaht auszubilden, die eine Dicke von 30 bis 200 µm aufweist.

Sofern das erfindungsgemäße Verfahren als eine Spiegelverschweißung durchgeführt wird, ist es bevorzugt, dass die Spiegelverschweißung der dünneren thermoplastischen Schaumstoffplatten über eine Dauer von maximal 10 Sekunden durchgeführt wird. Die Temperatur des Heizelements, vorzugsweise einer Heizplatte, kann dabei bis zu 500 °C betragen, vorzugsweise wird eine Spiegelverschweißung im Bereich von 200-300°C durchgeführt.

Sofern erfindungsgemäß ein Flammschutzmittel verwendet wird, ist es bevorzugt, dass das thermische Verschweißen in Gegenwart von mindestens einem Flammschutzmittel durchgeführt wird und dass pro zu verschweißendem Plattenpaar auf mindestens eine, vorzugsweise auf beide, thermisch zu verschweißenden Oberflächen der dünneren thermoplastischen Schaumstoffplatten das Flammschutzmittel in Mengen von mehr als 5 g/m² aufgetragen wird. Vorzugsweise wird auf beide thermisch zu verschweißenden Oberflächen das Flammschutzmittel in Mengen von mehr als 10 g/m², insbesondere von mehr als 15 g/m², aufgetragen.

In einer bevorzugten Ausführungsform der vorliegenden Erfindung wird das thermische Verschweißen in Gegenwart von mindestens zwei Flammschutzmitteln durchgeführt, wobei 0,5 bis 5 Gew.-% von mindestens einer halogenierten organischen Verbindung während der Herstellung der Ausgangsplatten in diese eingebracht werden. Vor dem thermischen Verschweißen wird mindestens ein weiteres Flammschutzmittel, vorzugsweise ein phosphorhaltiges Flammschutzmittel, auf pro Plattenpaar mindestens eine thermisch zu verschweißende Oberfläche der Ausgangsplatten aufgetragen, vorzugsweise in Mengen von mehr als 10 g/m². Das weitere Flammschutzmittel ist somit nach dem Verschweißungsvorgang größtenteils (also zu mehr als 90 %) in der Nähe der Schweißnaht der thermoplastischen Schaumstoffplatte angeordnet.

Erfindungsgemäß wird das thermische Verschweißen mit dünneren thermoplastischen Schaumstoffplatten durchgeführt, die eine Zellgröße < 150 µm, vorzugsweise < 80 µm, und/oder eine mittlere Zellenzahl > 6 Zellen / mm aufweisen. Während Ausgangsplatten mit einer mittleren Zellgröße 200 µm und größer eine erhöhten Oberflächenrauigkeit und grober Zellstruktur aufweisen, haben insbesondere Ausgangsdaten mit einer mittleren Zellgröße < 150 µm, vorzugsweise < 80 µm, eine sehr feine Struktur und eine glatte Oberfläche, was sich positiv auf das Bestehen der Brandtests auswirkt.

Sofern das erfindungsgemäße Verfahren als ein kontinuierliches thermisches Verschweißungsverfahren durchgeführt wird, erfolgt dies vorzugsweise unter Verwendung eines Heizelement, insbesondere eines Heizschwerts, und die Geschwindigkeit der thermisch zu verschweißenden dünneren thermoplastischen Schaumstoffplatten beträgt gegenüber dem Heizelement > 5 m/min, vorzugsweise > 10 m/min. Vorzugsweise betragen die Kontaktzeiten der thermisch zu verschweißenden dünneren thermoplastischen Schaumstoffplatten mit dem Heizelement < 1,5 Sekunden, insbesondere ≤ 1,0 Sekunden und/oder die Temperatur des Heizelements (Kontakttemperatur) von 150 bis 550 °C, insbesondere von 200 bis 400 °C. Besonders bevorzugt ist die Kontaktzeit ≤ 1,0 Sekunden und die Temperatur ist von 200 bis 400 °C.

Unabhängig von der konkreten Verschweißungstechnik (beispielsweise Spiegelverschweißung oder kontinuierliches Verschweißen unter Verwendung eines Heizschwerts) sind im Rahmen des erfindungsgemäßen Herstellungsverfahrens die nachfolgenden Ausführungsformen bevorzugt.

Vorzugsweise werden die erfindungsgemäßen thermoplastischen Schaumstoffplatten aus zumindest teilweise schäumhautfreien Ausgangsplatten hergestellt, das heißt beim thermischen Verschweißen sind pro zu verschweißendem Plattenpaar mindestens eine, vorzugsweise beide, thermisch zu verschweißenden Oberflächen der dünneren thermoplastischen Schaumstoffplatten (Ausgangsplatten) schäumhautfrei. Unter den Begriff "schäumhautfrei" wird im Rahmen der vorliegenden Erfindung verstanden, dass die beim Herstellungsprozess der jeweiligen thermoplastischen Schaumstoffplatte entstandene Schäumhaut beispielsweise durch Hobeln oder Fräsen wieder entfernt wird. Eine solche Schaumstoffplatte weist eine relativ unebene Oberfläche auf, die zahlreiche Vertiefungen oder Vorsprünge enthält. Die entsprechenden Vertiefungen sind jedoch willkürlich über die Oberfläche der entsprechenden thermoplastischen Schaumstoffplatte verteilt, die Vertiefungen weisen also keine Struktur auf. Der Vollständigkeit halber wird darauf hingewiesen, dass bei Verwendung eines Extrusionsschaumstoffes die entsprechende Oberfläche auch als extrusionshautfrei anstelle von schäumhautfrei bezeichnet wird.

In einer Ausführungsform der vorliegenden Erfindung können gegebenenfalls die zu verschweißenden Oberflächen mit strukturierten Vertiefungen versehen werden. Die strukturierten Vertiefungen können beliebige Strukturen beziehungsweise Strukturformen annehmen. Vorzugsweise sind die strukturierten Vertiefungen punktförmig, linienförmig oder gitterförmig, besonders bevorzugt gitterförmig. Die strukturierten Vertiefungen können 20 bis 80 %, vorzugsweise 40 bis 60 %, insbesondere 50 %, der jeweiligen Oberfläche einer dünneren thermoplastischen Schaumstoffplatte ausmachen. Beim thermischen Verschweißen wird im Rahmen der vorliegenden Erfindung an den Stellen, an denen die Oberfläche der dünneren thermoplastischen Schaumstoffplatte die strukturierten Vertiefungen aufweist, vorzugsweise keine Schweißnaht ausgebildet. Da sich bei dieser Ausführungsform der vorliegende Erfindung beim thermischen Verschweißen an den Stellen, an denen die Oberfläche der dünneren thermoplastischen Schaumstoffplatte die strukturierten Vertiefungen aufweist, keine Schweißnaht ausbildet, bedeutet dies, dass die auf den eingesetzten dünneren thermoplastischen Schaumstoffplatten enthaltenen strukturierten Vertiefungen auch nach dem thermischen Verschweißen erhalten bleiben und somit im Verfahrensprodukt (den zumindest zweilagigen thermoplastischen Schaumstoffplatten als solchen) ebenfalls vollständig oder zumindest weitgehend, vorzugsweise vollständig enthalten sind.

Die Strukturen können im Rahmen der vorliegenden Erfindung auch als Muster oder Strukturierungsmuster bezeichnet werden. Eine Struktur ist aus mindestens einer Strukturform, die auch als Struktureinheit bezeichnet werden kann, aufgebaut. Unter einer Struktureinheit (Strukturform) wird im Rahmen der vorliegenden Erfindung die kleinste Einheit in einem Muster (Struktur) verstanden. Eine solche Struktureinheit kann beispielsweise ein Karo, eine Raute, ein Rechteck, ein Quadrat oder eine Linie sein. Gegebenenfalls können solche Struktureinheiten sich abwechseln beziehungsweise miteinander kombiniert werden. So sind Muster denkbar, die aus mehreren verschiedenen Struktureinheiten aufgebaut sind, beispielsweise aus mehreren Linien von unterschiedlicher Stärke (Breite) und/oder Tiefe, die sich beispielsweise mit Rauten oder Quadraten abwechseln. So können auch in einem Gitter unterschiedliche Struktureinheiten enthalten sein, beispielsweise Quadrate von unterschiedlicher Größe, die abwechselnd angeordnet sind.

Die Abstände zwischen den einzelnen Struktureinheiten einer strukturierten Vertiefung auf der jeweiligen Oberfläche der dünneren thermoplastischen Schaumstoffplatte können beliebige Werte (Größen) annehmen, beispielsweise 30 mm. Vorzugsweise beträgt der Abstand zwischen den einzelnen Struktureinheiten der strukturierten Vertiefungen maximal 20 mm (Durchschnittswert über das gesamte Muster), insbesondere beträgt der Abstand 7,5 bis 20 mm. Die Breite einer Struktureinheit (Struktur), beispielsweise der Durchmesser eines Punktes (bei einer punktförmigen Struktur) oder die Breite einer Linie (bei einer linien- oder gitterförmigen Struktur) kann beliebig sein, vorzugsweise ist sie im Bereich von 1 bis 25 mm, mehr bevorzugt 5 bis 20 mm, insbesondere 10 bis 15 mm.

Ebenso können die Vertiefungen als solche (also die Tiefe einer Strukturierung) beliebige Werte (Größen) annehmen. So ist es denkbar, dass in Teilbereichen einer Oberfläche die gleichen Struktureinheiten/Muster enthalten sind, die sich jedoch hinsichtlich ihrer Tiefe unterscheiden. Die Vertiefungen sind (als Durchschnittswert) in aller Regel nicht größer (tiefer) als 25 % der entsprechenden Plattendicke, wobei dieser Wert bei sehr dünnen thermoplastischen Schaumstoffplatten (beispielsweise mit einer Dicke von weniger als 10 mm) auch etwas höher ausfallen kann. Hat eine dünne thermoplastischen Schaumstoffplatte beispielsweise eine Dicke von 100 mm, so haben die Vertiefungen (im Durchschnitt) vorzugsweise eine Tiefe von maximal 20 mm. Bevorzugt weisen die strukturierten Vertiefungen im Durchschnitt eine Tiefe von nicht größer als 10 mm auf, besonders bevorzugt eine Tiefe von nicht größer als 5 mm (jeweils bezogen auf die Teile der Oberfläche der entsprechenden dünneren thermoplastischen Schaumstoffplatte, die keine Vertiefungen aufweisen). Die Mindesttiefe einer strukturierten Vertiefung im Rahmen der vorliegenden Erfindung beträgt 0,5 mm, bevorzugt nur 1 mm, besonders bevorzugt 2 mm (als Durchschnittswerte jeweils bezogen auf die Teile der Oberfläche der entsprechenden dünneren thermoplastischen Schaumstoffplatte, die keine Vertiefungen aufweisen).

Die strukturierten Vertiefungen können auf der entsprechenden Oberfläche einer dünneren thermoplastischen Schaumstoffplatte nach beliebigen, dem Fachmann bekannten Methoden erzeugt werden. Vorzugsweise werden die strukturierten Vertiefungen durch Hobeln oder Fräsen, insbesondere durch Fräsen, der Oberfläche der dünneren thermoplastischen Schaumstoffplatten erzeugt. Die strukturierten Vertiefungen können auf einer Oberfläche (der Ausgangsplatte) erzeugt werden, die eine Schäumhaut aufweist oder die schäumhautfrei ist. Das Hobeln oder Fräsen zur Erzeugung einer Oberfläche mit strukturierten Vertiefungen unterscheidet sich von dem vorstehend beschriebenen Hobeln oder Fräsen zur Erzeugung einer schäumhautfreien Oberfläche insbesondere dahingehend, dass im Fall der Erzeugung einer Oberfläche mit strukturierten Vertiefungen das Hobeln oder Fräsen an ausgesuchten Stellen/Teilbereichen der entsprechenden Oberfläche unter Erzeugung der gewünschten Struktureinheit/Muster gezielt durchgeführt wird. Alternativ können die strukturierten Vertiefungen auf der entsprechenden Oberfläche auch in situ während des thermischen Verschweißens beispielsweise unter Verwendung von Vorrichtungen, die Noppen oder Rillen aufweisen, erzeugt werden.

Weiterhin ist es bei dieser Ausführungsform der vorliegenden Erfindung bevorzugt, dass die beiden thermisch zu verschweißenden Oberflächen identische oder zu mindestens 80 % übereinstimmende Strukturierungsmuster (Muster oder Struktur) auf weisen. Vorzugsweise weisen die beiden thermisch zu verschweißenden Oberflächen identische Strukturierungsmuster auf. Weiterhin ist es bevorzugt, dass die thermisch zu verschweißenden Oberflächen vor dem Verschweißen so übereinandergelegt werden, dass möglichst viele der strukturierten Vertiefungen auf beiden thermisch zu verschweißenden Oberflächen miteinander zur Deckung kommen. Besonders bevorzugt werden zwei Oberflächen mit identischen Strukturierungsmuster thermisch miteinander verschweißt, wobei die thermisch zu verschweißenden Oberflächen vor dem Verschweißen so übereinandergelegt werden, dass die strukturierten Vertiefungen auf beiden thermisch zu verschweißenden Oberflächen vollständig miteinander zur Deckung kommen.

Weiterhin ist es im Rahmen der vorliegenden Erfindung bevorzugt, dass auf Temperaturen oberhalb der Glasübergangstemperatur und/oder Schmelztemperatur der thermoplastischen Schaumstoffplatte erhitzt wird. Vorzugsweise wird das thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt.

Sofern im Rahmen der vorliegenden Erfindung auf mindestens eine Oberfläche von mindestens einer dünneren thermoplastischen Schaumstoffplatte mindestens ein Absorber von elektromagnetischer Strahlung aufgetragen wird, erfolgt vorzugsweise das thermische Verschweißen teilweise oder vollständig unter Verwendung von elektromagnetischer Strahlung. Der Fachmann kennt die hierfür erforderlichen Geräte zur Erzeugung der geeigneten elektromagnetischen Strahlung. Beispielsweise kann eine beschichtete Platte im Sekunden- bis Minutenbereich in einem Mikrowellenofen oder mit einem IR-Strahler bestrahlt werden.

Im erfindungsgemäßen Verfahren wird bei einem Pressdruck von 0,1 bis 0,5 bar ein Verpressen der thermisch zu verschweißenden zusammengefügten dünnen thermoplastischen Schaumstoffplatten durchgeführt . Das Verpressen erfolgt im Allgemeinen im Sekunden- bis Minutenbereich. Das Verpressen erfolgt erfindungsgemäß nach dem thermischen Verschweißen.

Gegebenenfalls kann im erfindungsgemäßen Verfahren ein Trocknungsschritt durchgeführt werden, beispielsweise nachdem ein Absorber von elektromagnetischer Strahlung auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100°C statt.

Nachfolgend wird die Erfindung anhand von Beispielen verdeutlicht.

Alle Versuche werden mit Styrodur 3035 CS (Handelsprodukt der BASF SE/Ausgangplatten (XPS)) durchgeführt, die eine Dicke von 50 mm und eine von Dichte von 33 g/l aufweisen. Die Ausgangsplatten sind abgelagert (älter als 10 Tage). Die Ausgangsplatten werden mittels einer Hobelmaschine an den thermisch zu verschweißenden Oberflächen von der Schäumhaut befreit. Die Dicke der Ausgangsplatten ist dann etwa 48 mm.

### Beispiel 1

In einer handelsüblichen Spiegelschweißanlage (Firma Brandson) werden bei 250 °C Plattentemperatur die beiden von der Schäumhaut befreiten Ausgangsplatten bei verschieden Zeiten verschweißt. Die Dicke (Stärke) der Schweißnaht wird mittels eines digitalen Aufsichtsmikroskops (Marke Scope Eye) bei etwa 60-facher Vergrößerung bestimmt. Die Messungen werden gleichmäßig über einen Querschnitt der Verschweißungsnaht verteilt. Es wird der Mittelwert aus fünf Messungen gebildet. Die Platten werden auf Zugfestigkeit in Plattenebene nach DIN EN 1607 und auf Brandverhalten auf B2 nach DIN 4102 geprüft. Bei der Brandprüfung wird die verschweißte Kontaktstelle direkt beflammt. Die mittlere Zellgröße beträgt 90 µm.

**Tabelle 1**

| Versuch | Zeit für Verschweißung | Dicke Verschwei-ßungsnaht | Zugfestigkeit | B2 |
|---|---|---|---|---|
| Erfindungsgemäß | (sec) | (µm) | (N/mm²) | |
| 1 | 5 | 140 | 0,18 | bestanden |
| 2 | 10 | 160 | 0,22 | bestanden |
| 3 | 10 | 190 | 0,25 | bestanden |
| 4 (Vergleich) | 15 | 210 | 0.34 | sicht bestanden |
| 5 (Vergleich) | 20 | 250 | 0.33 | nicht bestanden |
| 6 (Vergleich) | 30 | 300 | 0.36 | nicht bestanden |

### Beispiel 2

Auf die gehobelten Ausgangsplatten, die 1,4 Gew.% HBCD (Hexabromcyclododecan) enthalten, wird ein- oder beidseitig Flammschutzmittel vor dem Verschweißen aufgetragen. Die aufgetragene Menge ist in der nachfolgenden Tabelle 2 angegeben. Das verwendete Flammschutzmittel ist DMPP (Dimethylpropanphosphonat) Levagard, Firma Lanxess. Die Platten werden bei einer Temperatur von 250 °C für die angegebene Zeit verschweißt. Die mittlere Zellgröße der Versuche 1 bis 3 beträgt 90 µm. Die Zellgröße des Versuchs 4 liegt bei 190 µm.

**Tabelle 2**

| Versuch | Menge DMMP Seite 1 | Menge DMMP Seite 2 | Zugfestigkeit | Zeit für Verschweißung | Dicke Verschweißungsnaht | B2 |
|---|---|---|---|---|---|---|
| Erfindungsgemäß | (g/m²) | (g/m²) | (N/mm²) | (sec) | (µm) | |
| 1 | 20 | | 0,38 | 5 | 90 | bestanden |
| 2 | 15 | 10 | 0,33 | 3 | 130 | bestanden |
| 3 | 20 | 20 | 0,25 | 4 | 140 | bestanden |
| 4 | 20 | | 0,12 | 4 | 140 | bestanden |

### Beispiel 3

In den Versuchen wird eine kontinuierliche Fahrweise durch "Vorbeiziehen" der gehobelten Schaumstoffplatten am Heizelement (Heizschwert) simuliert. Das Vorbeiführen wird bei einer mit Geschwindigkeit von 10 bzw. 20 m/min durchgeführt, die kontinuierliche Fahrweise (im Vergleich zum Spiegelverschweißen) erfordert höhere Heizschwert-Temperaturen und kurze Kontaktzeiten. Es zeigt sich, dass bei zu hoher Temperaturbelastung entweder durch zu lange Kontaktzeiten oder zu hohe Schweißtemperaturen der B2-Test verfehlt wird. Die Breite des Heizelements beträgt 200 mm. Die mittlere Zellgröße beträgt 100 µm.

**Tabelle 3**

| Versuch | Zeit für Verschweißung | Temperatur Heizelement | Dicke Verschwei-ßungsnaht | Zugfestigkeit | B2 |
|---|---|---|---|---|---|
| Erfindungsgemäß | (sec) | (°C) | (µm) | (N/mm²) | |
| 1 | 0,06 | 400 | 50 | 0.21 | bestanden |
| 2 | 0,06 | 400 | 100 | 0.24 | bestanden |
| 3 | 0,06 | 400 | 100 | 0.27 | bestanden |
| 4* | 1,2 | 350 | 160 | 0.22 | bestanden |
| 5* | 1,20 | 380 | 190 | 0.31 | bestanden |
| 6* | 1,2 | 420 | 40 | 0.29 | bestanden |
| 7* (Vergleich) | 1,2 | 600 | 350 | 0.31 | nicht bestanden |
| 8 (Vergleich) | 0,6 | 600 | 300 | 0.28 | nicht bestanden |

| | | | | | |
|---|---|---|---|---|---|
| * Plattengeschwindigkeit 10 m/min, ansonsten 20 m/min. | | | | | |

## Patentansprüche

1. Thermoplastische Schaumstoffplatte, die zumindest zweilagig ist und die durch thermisches Verschweißen von mindestens zwei dünneren thermoplastischen Schaumstoffplatten hergestellt wird, und die mindestens eine Schweißnaht mit einer durchschnittlichen Dicke von 30 bis 200 µm aufweist, **dadurch gekennzeichnet, dass** die mindestens zwei dünneren thermoplastischen Schaumstoffplatten ein Extrusionsschaumstoff von Polystyrol oder von einem aus Styrol hergestellten Copolymer sind, und die Zellgröße der thermoplastischen Schaumstoffplatte < 150 µm ist, und/oder die mittlere Zellenzahl > 6 Zellen/mm beträgt.

2. Thermoplastische Schaumstoffplatte gemäß Anspruch 1, **dadurch gekennzeichnet, dass** jede Schweißnaht eine durchschnittliche Dicke von 30 bis 200 µm aufweist.

3. Thermoplastische Schaumstoffplatte gemäß Anspruch 1 oder 2, **dadurch gekennzeichnet, dass** die Schweißnaht eine durchschnittliche Dicke von 50 bis 150 µm, mehr bevorzugt von 70 bis 130 µm, insbesondere von 80 bis 100 µm, aufweist.

4. Thermoplastische Schaumstoffplatte gemäß einem der Ansprüche 1 bis 3, **dadurch gekennzeichnet, dass** die thermoplastische Schaumstoffplatte mindestens ein Flammschutzmittel enthält, das vorzugsweise ausgewählt ist aus einem Phosphat, einem Phosphit, einem Phosphonat, einem Polyphosphonat, Melamin, einem Aluminiumoxidhydrat oder einer halogenierten organischen Verbindung.

5. Thermoplastische Schaumstoffplatte gemäß einem Ansprüche 1 bis 4, **dadurch gekennzeichnet, dass** pro zu verschweißendem Plattenpaar mindestens eine, vorzugsweise beide, thermisch zu verschweißenden Oberflächen der dünneren thermoplastischen Schaumstoffplatten schäumhautfrei sind.

6. Thermoplastische Schaumstoffplatte gemäß einem der Ansprüche 1 bis 5, **dadurch gekennzeichnet, dass** die Zellgröße der thermoplastischen Schaumstoffplatte < 80 µm ist.

7. Verfahren zur Herstellung einer thermoplastischen Schaumstoffplatte gemäß einem der Ansprüche 1 bis 6, wobei mindestens zwei dünnere thermoplastische Schaumstoffplatten thermisch miteinander verschweißt werden, wobei mindestens eine Schweißnaht ausgebildet wird, die eine durchschnittliche Dicke von 30 bis 200 µm aufweist, **dadurch gekennzeichnet, dass** nach dem thermischen Verschweißen ein Verpressen der zumindest zweilagigen thermoplastischen Schaumstoffplatte durchgeführt wird, wobei das Verpressen mit einem Pressdruck von 0,1 bis 0,5 bar erfolgt.

8. Verfahren gemäß Anspruch 7, **dadurch gekennzeichnet, dass** eine Spiegelverschweißung der dünneren thermoplastischen Schaumstoffplatten über eine Dauer von maximal 10 Sekunden durchgeführt wird.

9. Verfahren gemäß Anspruch 7 oder 8, **dadurch gekennzeichnet, dass** das thermische Verschweißen in Gegenwart von mindestens einem Flammschutzmittel durchgeführt wird und dass pro zu verschweißendem Plattenpaar auf mindestens eine, vorzugsweise auf beide, thermisch zu verschweißenden Oberflächen der dünneren thermoplastischen Schaumstoffplatten das Flammschutzmittel in Mengen von mehr als 5 g/m² aufgetragen wird.

10. Verfahren gemäß einem der Ansprüche 7 bis 9, **dadurch gekennzeichnet, dass** das thermische Verschweißen mit dünneren thermoplastischen Schaumstoffplatten durchgeführt wird, die eine Zellgröße < 150 µm, vorzugsweise < 80 µm, und/oder eine mittlere Zellenzahl > 6 Zellen / mm aufweisen.

11. Verfahren gemäß einem der Ansprüche 7 bis 10, **dadurch gekennzeichnet, dass** in einem kontinuierlichen thermischen Verschweißungsverfahren ein Heizelement, vorzugsweise ein Heizschwert, eingesetzt wird und die Geschwindigkeit der thermisch zu verschweißenden dünneren thermoplastischen Schaumstoffplatten gegenüber dem Heizelement > 5 m/min, vorzugsweise > 10 m/min beträgt.

12. Verfahren gemäß Anspruch 11, **dadurch gekennzeichnet, dass** die Kontaktzeiten der thermisch zu verschweißenden dünneren thermoplastischen Schaumstoffplatten mit dem Heizelement ≤ 1,5 Sekunden und/oder die Temperatur des Heizelements (Kontakttemperatur) von 150 bis 550 °C betragen.

13. Verfahren gemäß einem der Ansprüche 7 bis 12, **dadurch gekennzeichnet, dass** beim thermischen Verschweißen pro zu verschweißendem Plattenpaar mindestens eine, vorzugsweise beide, thermisch zu verschweißenden Oberflächen der dünneren thermoplastischen Schaumstoffplatten schäumhautfrei sind.

14. Verfahren gemäß einem der Ansprüche 7 bis 13, **dadurch gekennzeichnet, dass** das thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt wird.

## Claims

1. A thermoplastic foam sheet which has at least two layers and which is produced by thermal welding of at least two thinner thermoplastic foam sheets, and which has at least one weld with average thickness from 30 to 200 µm, wherein the at least two thinner thermoplastic foam sheets are an extruded foam made of polystyrene or are made of a copolymer produced from a styrene, and the cell size of the thermoplastic foam sheet is < 150 µm, and/or the average cell number is > 6 cells/mm.

2. The thermoplastic foam sheet according to claim 1, wherein the average thickness of each weld is from 30 to 200 µm.

3. The thermoplastic foam sheet according to claim 1 or 2, wherein the average thickness of the weld is from 50 to 150 µm, more preferably from 70 to 130 µm, in particular from 80 to 100 µm.

4. The thermoplastic foam sheet according to any of claims 1 to 3, wherein the thermoplastic foam sheet comprises at least one flame retardant preferably selected from a phosphate, a phosphite, a phosphonate, a polyphosphonate, melamine, an aluminum oxide hydrate or a halogenated organic compound.

5. The thermoplastic foam sheet according to any of claims 1 to 4, wherein in each pair of sheets to be welded at least one of, preferably both of, the thinner-thermoplastic-foam-sheet surfaces to be welded is/are free from foaming skin.

6. The thermoplastic foam sheet according to any of claims 1 to 5, wherein the cell size of the thermoplastic foam sheet is < 80 µm.

7. A process for the production of a thermoplastic foam sheet according to any of claims 1 to 6, where at least two thinner thermoplastic foam sheets are welded thermally to one another, where the average thickness of at least one weld that is formed is from 30 to 200 µm, wherein after the thermal welding process the at least two-layer thermoplastic foam sheet is subjected to a pressing process, where the pressing process uses a pressure of from 0.1 to 0.5 bar.

8. The process according to claim 7, wherein the thinner thermoplastic foam sheets are subjected to a hot-plate welding process for a period of at most 10 seconds.

9. The process according to claim 7 or 8, wherein the thermal welding process is carried out in the presence of at least one flame retardant and that in each pair of sheets to be welded quantities of more than 5 g/m² of the flame retardant are applied to at least one of, preferably both of, the thinner-thermoplastic-foam-sheet surfaces to be thermally welded.

10. The process according to any of claims 7 to 9, wherein the cell size of thinner thermoplastic foam sheets used for the thermal welding process is < 150 µm, preferably < 80 µm, and/or their average cell number is > 6 cells/mm.

11. The process according to any of claims 7 to 10, wherein a continuous thermal welding process uses a heating element, preferably a heating lance, and the velocity, in relation to the heating element, of the thinner thermoplastic foam sheets to be thermally welded is > 5 m/min, preferably > 10 m/min.

12. The process according to claim 11, wherein the heating-element-contact times of the thinner thermoplastic foam sheets to be thermally welded are ≤ 1.5 seconds and/or the temperature of the heating element (contact temperature) is from 150 to 550°C.

13. The process according to to any of claims 7 to 12, wherein in each pair of sheets to be welded in the thermal welding process at least one of, preferably both of, the thinner-thermoplastic-foam-sheet surfaces to be welded is/are free from foaming skin.

14. The process according to any of claims 7 to 13, wherein the thermal welding process is carried out at temperature which are from 50 to 300°C above the glass transition temperature in the case of amorphous thermoplastic foams or which are from 50 to 100°C above the melting point in the case of semi-crystalline thermoplastic foams.

## Revendications

1. Plaque en mousse thermoplastique qui est au moins à deux couches et qui est préparée par soudage thermique d'au moins deux plaques en mousse thermoplastique plus minces et qui présente au moins un joint de soudure présentant une épaisseur moyenne de 30 à 200 µm, **caractérisée en ce que** lesdites au moins deux plaques en mousse thermoplastique plus minces sont une mousse extrudée de polystyrène ou d'un copolymère préparé à partir de styrène et la dimension des cellules de la plaque en mousse thermoplastique est < 150 µm et/ou le nombre moyen de cellules est > 6 cellules/mm.

2. Plaque en mousse thermoplastique selon la revendication 1, **caractérisée en ce que** chaque joint de soudure présente une épaisseur moyenne de 30 à 200 µm.

3. Plaque en mousse thermoplastique selon la revendication 1 ou 2, **caractérisée en ce que** le joint de soudure présente une épaisseur moyenne de 50 à 150 µm, plus préférablement de 70 à 130 µm, en particulier de 80 à 100 µm.

4. Plaque en mousse thermoplastique selon l'une quelconque des revendications 1 à 3, **caractérisée en ce que** la plaque en mousse thermoplastique contient au moins un agent ignifuge qui est de préférence choisi parmi un phosphate, un phosphite, un phosphonate, un polyphosphonate, la mélamine, un oxyde d'aluminium hydraté ou un composé organique halogéné.

5. Plaque en mousse thermoplastique selon l'une quelconque des revendications 1 à 4, **caractérisée en ce que**, par paire de plaques à souder, au moins une surface, de préférence les deux, à souder thermiquement des plaques en mousse thermoplastique plus minces est/sont exempte(s) de peau de mousse.

6. Plaque en mousse thermoplastique selon l'une quelconque des revendications 1 à 5, **caractérisée en ce que** la dimension des cellules de la plaque en mousse thermoplastique est < 80 µm.

7. Procédé pour la fabrication d'une plaque en mousse thermoplastique selon l'une quelconque des revendications 1 à 6, au moins deux plaques en mousse thermoplastique plus minces étant soudées thermiquement l'une à l'autre, au moins un joint de soudure étant formé, qui présente une épaisseur moyenne de 30 à 200 µm, **caractérisé en ce qu'**après le soudage thermique, on réalise une compression de la plaque en mousse thermoplastique au moins à deux couches, la compression étant réalisée à une pression de compression de 0,1 à 0,5 bar.

8. Procédé selon la revendication 7, **caractérisé en ce qu'**on réalise un soudage au miroir des plaques en mousse thermoplastique plus minces sur une durée d'au maximum 10 secondes.

9. Procédé selon la revendication 7 ou 8, **caractérisé en ce que** le soudage thermique est réalisé en présence d'au moins un agent ignifuge et **en ce que**, par paire de plaques à souder, l'agent ignifuge est appliqué en des quantités supérieures à 5 g/m² sur au moins une surface, de préférence les deux, à souder thermiquement des plaques en mousse thermoplastique plus minces.

10. Procédé selon l'une quelconque des revendications 7 à 9, **caractérisé en ce que** le soudage thermique est réalisé avec des plaques en mousse thermoplastique plus minces, qui présentent une dimension de cellules < 150 µm, de préférence < 80 µm, et/ou un nombre moyen de cellules > 6 cellules/mm.

11. Procédé selon l'une quelconque des revendications 7 à 10, **caractérisé en ce que**, dans un procédé de soudage thermique continu, un élément chauffant, de préférence une règle chauffante à biseaux, est utilisé et la vitesse des plaques en mousse thermoplastique plus minces à souder thermiquement par rapport à l'élément chauffant étant > 5 m/min, de préférence > 10 m/min.

12. Procédé selon la revendication 11, **caractérisé en ce que** les durées de contact des plaques en mousse thermoplastique plus minces à souder thermiquement avec l'élément chauffant sont ≤ 1,5 seconde et/ou la température de l'élément chauffant (température de contact) est de 150 à 550°C.

13. Procédé selon l'une quelconque des revendications 7 à 12, **caractérisé en ce que** lors du soudage thermique, par paire de plaques à souder, au moins une surface, de préférence les deux, à souder thermiquement des plaques en mousse thermoplastique plus minces est/sont exempte(s) de peau de mousse.

14. Procédé selon l'une quelconque des revendications 7 à 13, **caractérisé en ce que** le soudage thermique est réalisé à des températures de 50 à 300°C au-dessus de la température de transition vitreuse pour des mousses thermoplastiques amorphes ou de 50 à 100°C au-dessus de la température de fusion dans le cas de mousses thermoplastiques partiellement cristallines.
